(19) Europäisches Patentamt
European Patent Office
Office européen des brevets

(11) Publication number: 0 073 276
A1

# (12) EUROPEAN PATENT APPLICATION

(21) Application number: 81303844.5

(22) Date of filing: 24.08.81

(51) Int. Cl.³: A 23 K 1/16, A 23 K 1/22, A 23 K 1/18, C 07 C 129/12

(43) Date of publication of application: 09.03.83 Bulletin 83/10

(84) Designated Contracting States: AT BE CH DE FR GB IT LI LU NL SE

(71) Applicant: RORER INTERNATIONAL (OVERSEAS) INC., 100 West Tenth Street, Wilmington, DE 19899 (US)

(72) Inventor: Chou, Billy Ja-Ray, 1560 Greenlawn Road, Paoli, Pennsylvania 19301 (US)

(74) Representative: Sanderson, Laurence Andrew et al, Sanderson & Co. European Patent Attorneys 97 High Street, Colchester Essex (GB)

(54) **A method of increasing the feed efficiency of animals, and compositions for use in such a method.**

(57) The feed efficiency of an animal may be increased by the administration of a compound which increases the dwell time of nutrient matter in the digestive tract of the animal and which thereby affords an increase in digestive absorption. The compound is preferably an antimotility agent, and is most preferably a substituted phenylamidinourea or a substituted amidino-phenylurea.

The compounds are preferably administered to groups of animals by regularly incorporating the compounds in the animals' feed.

EP 0 073 276 A1

# A METHOD OF INCREASING THE FEED EFFICIENCY OF ANIMALS, AND COMPOSITIONS FOR USE IN SUCH A METHOD

This invention relates to the field of agents used to promote feed-efficiency in animals, particularly when administered as feed additives, and to a method for promoting the growth rate of food-producing animals, especially livestock and poultry, and for increasing animal products, for example, milk production in mammalian species and egg production in avian species.

It is generally accepted that the meat, poultry, dairy and cultivated fishing industries provide the most inefficient source of food for human consumption. These industries use feed sources (for example, grains, fruits, and vegetables) which are also a primary source of nutrients for humans. The production of livestock, poultry and cultivated fish entails the consumption of more primary source protein and carbohydrates fit for human consumption than is replaced by that of the resultant animal. In addition to the actual reduction in primary source foods for human consumption created by these industries, the cost of protein and carbohydrate supplied for human consumption through secondary sources is substantially magnified. In view of these considerations, there is need for improvement in the utilization of animal feed in the raising of animals as secondary food sources.

A number of synthetic chemical compounds and naturally occurring materials have been utilized to increase the growth rate of animals and to decrease the consumption of animal foodstuffs. These agents fall into a number of categories, including: antibacterials, such as, sulpha drugs and antibiotics; parasitic prophylactics; metabolic drugs; sedatives or tranquilizers; and, in ruminants, nitrogen supplements and rumen bacterial respiration modifiers.

The antibacterials are effective by reducing the incidence of bacterial disease in the animal population.

The antiparasitic agents are effective in reducing the incidence of parasitic infection.

Metabolic drugs increase metabolic synthesis of protein and include the hormones, such as, estrogens, progesterone and diethylstilbesterol.

Sedatives and tranquilizers effect a reduction in animal movement and hyperactivity resulting in greater protein synthesis and weight retention. Sedatives and tranquilizers of the triazole and benzdiazepine class of compounds have been disclosed as useful in U.S. Patent Nos. 3,914,245 to Gall et al and 3,933,794 to Hester et al.

Ruminant feed containing supplemental nitrogen enhances protein synthesis. Nitrogen supplements have been disclosed in U.S. Patent Nos.: 3,989,846 to Helgerson (slow release urea composition); 3,843,799 to Elofson et al (complex glucosylurea converted to ammonia in rumen); and 4,044,156 to Diner et al (monoglucoxyl ureide). Ruminant feed

supplements which are formulated to be resistant to microbial breakdown in the rumen, but not resistant to substantial digestive breakdown in the abomasum and intestines have been disclosed in U.S. Patent Nos.: 3,988,480 to Ames et al; 3,959,493 to Ballsrud et al; 4,001,390 to Fildes; and 3,562,806 to Grant et al.

Rumen bacterial respiration modifiers act through an effect on the bacterial population ordinarily present in the animals' digestive system and reduce the amount of bacterial products which are not absorbed by the ruminant. Feed supplements for ruminants which influence the O-R potential of microfloral respiration in the rumen have been disclosed as feed efficiency agents in U.S. Patent No. 2,808,332 to Anderson et al. The reduction of gaseous waste production in ruminants has been reported in U.S. Patent No. 3,801,710 to Parish et al which discloses the administration to ruminants of certain haloaldehyde sulphonates and phosphonates. U.S. Patent 3,796,797 to Parish discloses the administration to ruminants of a chloral molasses feed.

Other agents, such as anticholinergics, have also been used.

Most of the known growth promotants can have undesired side effects. The antibacterials and anitparasitics pose the problem that their use will result in resistant strains of disease-causing bacteria. Hormonal agents can also produce unwanted side effects, and in some cases, such agents have been shown to be carcinogenic. Sedatives and tranquilizers can leave undesirable residues in the animal. The effectiveness of anticholinergics is

limited due to the undesirable side effects manifested when therapeutic doses are administered.

The present invention is directed to improved means for effecting feed-efficiency in animals. More particularly it is directed to a method for increasing the feed efficiency of animals.

Accordingly this invention provides a method for increasing the feed efficiency of an animal, which method comprises administering to the animal one or more feed efficiency agents, being compounds which increase the dwell time of nutrient matter in the digestive tract of the animal and which thereby afford an increase in digestive absorption, the one or more agents being administered to the animal for a period of time sufficient to allow an increase in the digestion and absorption level of nutrients ingested by the animal above the level which would have been achieved had the agent or agents not been administered to the animal.

Numerous benefits are achieved as a result of the use of the present invention. The increase in the digestive absorption of nutrient matter manifests itself over a period of time in either a material increase in weight of the animal, or in the same increase in weight achieved in a lesser period of time or with a reduction in the quantity of the animals dietary intake. This is realized without the adverse side effects that accompany the use of other growth promotants, and with the additional benefit that there is a reduction in waste generation by the animal owing to a more efficient digestive process.

Another benefit of this invention resides in shortening the period of growth from infancy to maturity in animals which produce food, in increasing the production or development of other animal products, by application of the invention during the growth stages of the animals.

Still another benefit of this invention is that the feed conversion ratio of a healthy feeding animal may be increased.

It has been found that certain antimotility agents are especially effective in lowering the unit amount of food consumed by feeding animals per unit increase in animal product output. As the term is used herein, an "animal product" may be the animal itself, alive or dead, or substances produced and taken from the animal while alive, such as eggs, meat, wool or fur. In standard laboratory screening tests, described more fully below, certain antimotility agents have been shown to be effective in increasing the residence time in the animal of ingested food, and effecting a corresponding increase in the amount of digestible materials actually digested and absorbed by the test animal.

A particular class of compounds preferred for use as feed-efficiency agents in the present invention are amidinoureas having antimotility properties, for example, the amidinoureas of general formula I defined below. These are readily absorbed through the intestinal wall of mammals and fowl, and may be administered as compositions formulated as tablets,

capsules, powders or liquids suitable for either direct oral administration or in combination with animal feed. However, other antimotility agents may be used in the present invention, e.g. diphenoxylates and loperamide.

The antimotility agents used to increase feed efficiency can, if desired, be used in combination with other food additives such as growth promoters, compositions for providing electrolyte balance, agents for improving taste, smell, texture and the like, or with therapeutic agents such as sulphonamides, sulphones, antibiotics, hormones, or with other suitable excipients.

Various amidinoureas falling within the broad class of compounds useful as feed-efficiency agents in the present invention are known also for the purpose of treating certain veterinary diseases, such as scours. However, for veterinary purposes such compounds are administered for limited periods of time at therapeutic dosages to counter the disease. In contrast, the present invention relates to the continuous feeding or the feeding on a regular basis of a non-therapeutic dosage of a feed efficiency agent irrespective of the presence of any veterinary disease in the animal and for an extended period of time. In normal use, this invention is practiced on a large number of healthy feeding animals, such as, a herd of cattle or a flock of sheep, instead of selectively administering a therapeutic dose of compound to sickly members of the animal group.

Amidinoureas suitable for use as feed efficiency agents in this invention are compounds of the formula:

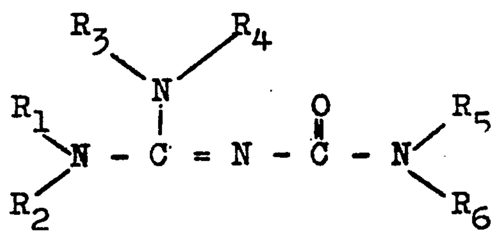

(I)

[wherein <u>either</u> $R_1$ is phenyl, substituted phenyl (as defined herein), aralkyl, heterocycle (as defined herein) or substituted heterocycle (as defined herein), and $R_2$, $R_5$ and $R_6$, which may be the same or different, are hydrogen, lower-alkyl, hydroxy, lower-alkoxy, lower-alkenyl, cyclo-lower-alkenyl, cyclo-lower-alkyl, aralkyl, lower-alkynyl, halo-alkyl, hydroxy-lower-alkyl, lower-alkoxy-lower--alkyl, cyano-lower-alkyl, amino-lower-alkyl, mono- or di-(lower-alkyl)-amino-lower-alkyl, carbamoyl--lower-alkyl, mono- or di-(alkyl)-carbamoyl-lower--alkyl, lower-alkoxy-carbamoyl-lower-alkyl, aralkoxy-carbamoyl-lower-alkyl, acyl-lower-alkyl, alkyl--sulphonyl or aralkyl-sulphonyl, with the additional possibility that $R_5$, $R_6$ and the intervening nitrogen atom may together form a 5 or 6 membered heterocyclic ring which optionally may include 1 or 2 additional hetero atoms chosen independently from oxygen, nitrogen and sulphur;

<u>or</u> $R_5$ is phenyl, substituted phenyl (as defined herein), aralkyl, heterocycle (as defined herein) or substituted heterocycle (as defined herein), and $R_1$, $R_2$ and $R_6$, which may be the same or different, are hydrogen, lower-alkyl, hydroxy, lower-alkoxy, lower-alkenyl, cyclo-lower-alkenyl, cyclo-lower--alkyl, aralkyl, lower-alkynyl, halo-alkyl, hydroxy--lower-alkyl, lower-alkoxy-lower-alkyl, cyano-lower--alkyl, amino-lower-alkyl, mono- or di-(lower-alkyl)--amino-lower-alkyl, carbamoyl-lower-alkyl, mono- or

di-(alkyl)-carbamoyl-lower-alkyl, lower-alkoxy--carbamoyl-lower-alkyl, aralkoxy-carbamoyl-lower--alkyl, acyl-lower-alkyl, alkyl-sulphonyl or aralkyl-sulphonyl, with the additional possibility that either $R_1$, $R_2$ and the intervening nitrogen atom may together form a 5 or 6 membered heterocyclic ring, or $R_1$, $R_3$ and the intervening two nitrogen atoms and carbon atom may together form a 5 to 8 membered heterocyclic ring, which ring may in either case optionally include 1 or 2 additional hetero atoms chosen independently from oxygen, nitrogen and sulphur;
and $R_3$ (when not forming part of a heterocyclic ring with $R_1$) and $R_4$, which may be the same or different, are hydrogen, lower-alkyl, lower-alkoxy, lower-alkenyl, lower-alkynyl, cyclo-lower-alkyl or aralkyl] or non-toxic acid addition salts thereof.

As employed throughout this Specification the following terms, unless otherwise indicated, shall be understood to have the following meanings:

"Alkyl" means a saturated aliphatic hydrocarbon which may have a straight or branched chain, lower-alkyl being preferred. Also included within the term are cycloalkyl-lower-alkyl groups such as cyclopropylmethyl and the like.

"Lower-alkyl" means alkyl as above having up to about 6 carbon atoms. Suitable lower-alkyl groups are methyl, ethyl, propyl, isopropyl, butyl, sec-butyl, tert-butyl, pentyl and isopentyl.

"Cycloalkyl" means a monocyclic saturated hydrocarbon group having up to about 6 carbon atoms, preferably cyclopropyl, cyclopentyl and cyclohexyl.

"Alkenyl" means an aliphatic hydrocarbon which contains one or more double bonds and which may have a straight or branched chain. Lower alkenyl is preferred.

"Lower alkenyl" means alkenyl as above having up to about 6 carbon atoms, such as ethylene, propylene, butylene and isobutylene etc.

"Aryl" is an aromatic radical and includes in particular phenyl or substituted phenyl.

"Substituted phenyl" means phenyl substituted by one or more radicals chosen independently from halo, lower-alkyl, halo-lower-alkyl, nitro,amino, acylamino, hydroxy, lower-alkoxy, aryl-lower--alkoxy, acyloxy, carboxy, cyano, halo-lower--alkoxy and lower-alkyl-sulphonyl.

"Aralkyl" means alkyl (preferably lower-alkyl) substituted by one or more aryl groups, e.g. benzyl or phenethyl, etc.

"Heterocycle" means a 5 to 8 membered ring comprising apart from carbon atoms from about 1 to about 3 hetero atoms chosen independently from nitrogen, oxygen and sulphur, for example pyridyl, 2-pyridyl, 3-pyridyl, pyrimidyl, pyrazolyl, imidazolyl, furyl, thienyl, oxazolyl, thiazolyl, piperidyl, piperazinyl, morpholinyl, thiomorpholinyl and diazepinyl.

"substituted heterocycle" means heterocycle as above substituted by one or more radicals chosen independently from halo, lower-alkyl, halo--lower-alkyl, nitro, amino, acylamino, hydroxy, lower-alkoxy, aryl-lower-alkoxy, acyloxy, carboxy, cyano, halo-lower-alkoxy and lower-alkyl-sulphonyl. Preferred substituted heterocycles are those having a substitutent on one or both carbon atoms vicinal to the ring atom attached to the amidino or urea nitrogen.

"Halo" and "halogen" include fluorine, chlorine, bromine and iodine.

"Halo-alkyl" and "halo-phenyl" include alkyl and phenyl having one or more halo substituents which may be the same or different, such as trifluoromethyl, 1-chloro-2-bromo-ethyl, chlorophenyl or 2-chloro-6-bromophenyl etc.

The term "acyl" means a radical of the formula RCO, wherein R is an organic radical, such as lower-alkanoyl or aroyl. In lower-alkanoyl R is lower-alkyl, as in acetyl and propionyl and the like, and in aroyl R is aryl, as in benzoyl.

The term "acyloxy" means a radical of the formula RCOO, wherein R is an organic radical, such as acetoxy, propionoxy, benzoyloxy and the like.

The term "acylamino" means an organic amido group of the formula RCONH, where R is alkyl or aralkyl, preferably lower-alkyl or aryl-lower-alkyl.

"Alkynyl" means an aliphatic hydrocarbon containing one or more triple bonds, and which may have a straight or branched chain. Lower alkynyl is preferred.

"Lower alkynyl" means alkynyl of up to about 6 carbon atoms, such as propargyl, butynyl and pentynyl etc.

Where in formula I $R_1$ and $R_2$ or $R_5$ and $R_6$ form a 5 or 6 membered heterocyclic ring, this may be for instance pyridyl, pyrimidyl, pyrazolyl, imidazolyl, oxazolyl, thiazolyl, piperidyl, piperazinyl, morphlinyl or thiomorpholinyl. Pyridyl is preferred.

Where in formula I $R_1$ and $R_3$ form a 5 to 8 membered heterocyclic ring, this may be for instance pyrimidyl, imidazolyl or diazepinyl etc.

It should be understood that whereas the

structure of the amidinoureas of formula I is shown in a particular configuration for purposes of illustration, the amidinoureas may exist in various enolized or tautomeric forms, particularly where one of $R_3$ and $R_4$ is hydrogen, as shown, for example, by the following formula:

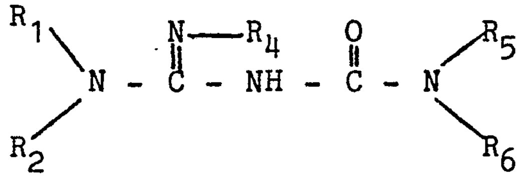

(I-a)

Certain of the amidinoureas can also be obtained as hydrates or in different polymorphic forms. The formulae used herein to designate the amidoureas are to be taken to include the structures actually shown along with their alternative or transient states.

Among the amidinoureas of formula I, a particularly preferred group suitable for use in accordance with this invention are those in which the $R_5$ or $R_1$ substituent is phenyl or substituted phenyl, and particularly phenyl having substituents in the 2 and/or 6 positions (i.e. ortho to the carbon attached to the urea nitrogen). A preferred group of such amidinoureas comprises the compounds of the formula:

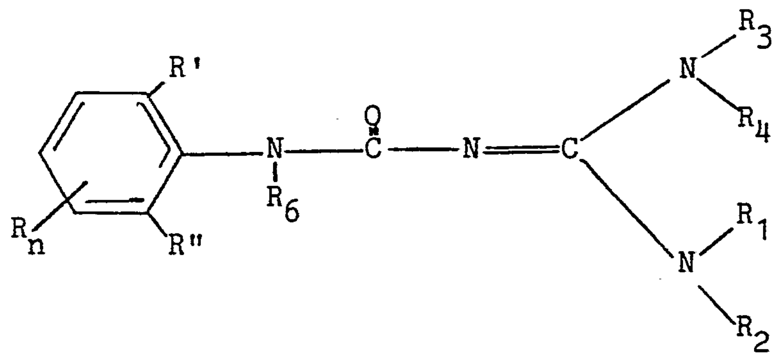

(II)

[wherein $R_1$, $R_2$, $R_3$ and $R_4$, which may be the same or different are hydrogen, lower-alkyl, hydroxy, halo-lower-alkyl or lower-alkoxy; $R_6$ is hydrogen or lower-alkyl; R' and R", which may be the same or different, are hydrogen, lower-alkyl, lower-alkoxy, halo or halo-lower-alkyl; and $R_n$ represents zero, one, two or three substituents in any one or more of the para and meta positions, which substituents may be independently chosen from hydrogen, lower-alkyl, halo, lower-alkoxy, nitro, amino and halo-lower-alkyl] and the non-toxic acid addition salts thereof; and the compounds of the formula:

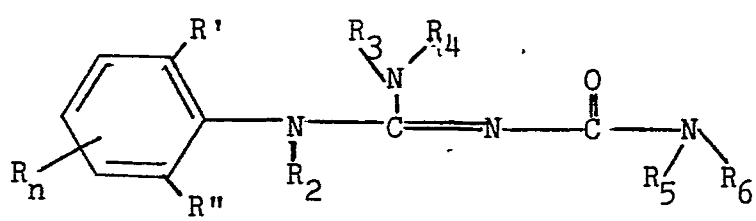

(III)

[wherein $R_3$, $R_4$, $R_5$ and $R_6$, which may be the same or different, are hydrogen, lower-alkyl, hydroxy, halo-lower-alkyl or lower-alkoxy; $R_2$ is hydrogen or lower-alkyl; R' and R", which may be the same or different, are hydrogen, lower-alkyl, lower-alkoxy, halo or halo-lower-alkyl; and $R_n$ represents zero, one, two or three substituents in any one or more of the para and meta positions, which substituents may be independently chosen from hydrogen, lower-alkyl, halo, lower-alkoxy and halo-lower-alkyl ] and the non-toxic acid addition salts thereof.

Particularly preferred amidinoureas of Formulae I, II and III are those wherein the R' and R" phenyl substituents are lower-alkyl, lower-alkoxy or halo, and at least one of $R_1$, $R_2$, $R_3$, and $R_5$ is hydrogen. The preferred lower alkyl substituents are methyl, ethyl, propyl, and isopropyl. The preferred halo substituents are chlorine and bromine. The preferred halo-lower-alkyl substituents are chloromethyl and trifluoromethyl.

A still more preferred group of amidinoureas suitable for use in this invention comprises the compounds of the formula:

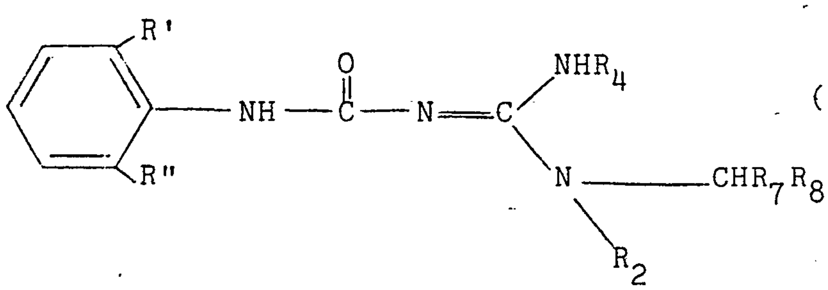

(IV)

[wherein $R_2$, $R_4$, $R_7$ and $R_8$, which may be the same or different, are hydrogen, lower-alkyl, lower-alkoxy or hydroxy; and R' and R", which may be the same or different, are hydrogen, halo or lower-alkyl] and their non-toxic acid addition salts; and the compounds of the formula:-

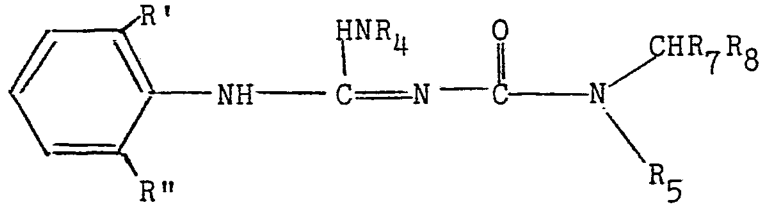

(V)

[wherein $R_4$, $R_5$, $R_7$ and $R_8$, which may be the same or different, are hydrogen, lower alkyl, lower-alkoxy or hydroxy; and R' and R", which may be the same or different, are hydrogen, halo or lower-alkyl] and their non-toxic acid addition salts.

Another preferred group of amidinoureas for use in this invention are the compounds of the formula:-

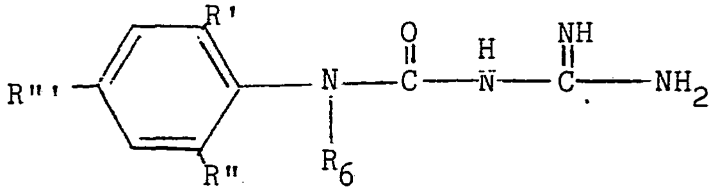

(VI)

[wherein R' and R", which may be the same or different, are halo, lower-alkyl, lower-alkoxy or nitro; R"' is hydrogen, lower-alkyl, halo or nitro; and $R_6$ is hydrogen or lower-alkyl] and their non-toxic acid addition salts.

The compounds of Formulae I to VI can be used in this invention in the form of the base or as salts which may be prepared by reacting these compounds with non-toxic organic or inorganic acids. Suitable acid addition salts are, for example, the salts derived from the following acids: inorganic acids such as hydrochloric acid, nitric acid, sulphuric acid, phosphorous acid and orthophosphoric acid etc.; aliphatic mono- and dicarboxylic acids such as acetic acid, propionic acid, succinic acid, formic acid, caprylic acid, maleic acid, oxalic acid and malonic acid, etc.; phenyl-substituted alkanoic acids, hydroxy-alkanoic acids, aromatic carboxylic acids, and aliphatic and aromatic sulphonic acids such as methylbenzoic acid, phthalic acid, benzenesulphonic acid, phenylpropionate, tartaric acid, citric acid, lactic acid, glycollic acid, phenylacetic acid, phenylbutyric acid and methane-sulphonic acid etc.

Suitable amidinoureas for use as feed efficiency agents are also those disclosed in the Arzeimettel Forschung, 28 (II), 1433--1480 (1978) and in U.S. Patent Nos. 4,115,647; 4,088,785; 4,025,652; 4,115,564; 4,060,633; 4,246,409; 4,058,557 and 4,147,804, the disclosures of which are incorporated herein by reference.

The amidinoureas employed in this invention may be prepared by methods known in the art, as disclosed in the incorporated references noted above.

Exemplary amidinoureas prepared in accordance with such teachings for use in this invention are named below, wherein the urea nitrogens are designated as positions 1 and 3:

1-(2,6-dimethylphenyl)-3-methylamidinourea;
o-chlorophenylamidinourea;
(2,3- dichlorophenylamidino)urea;
(2,4-dichlorophenylamidino)urea;
(2,5-dichlorophenylamidino)urea;
1-(2',6'-dimethylphenyl)-3-(1',1',3',3'-tetramethylamidino)-urea;
(3,4-dichlorophenylamidino)urea;
(3,5-dichlorophenylamidino)urea;
(2,6-dichlorophenylamidino)urea;
m-chlorophenylamidinourea;
p-chlorophenylamidinourea;
3,4-difluorophenylamidinourea;
m-bromophenylamidinourea;
p-bromophenylamidinourea;
3,4-dibromophenylamidinourea;
3-chloro-4-bromophenylamidinourea;
3-bromo-4-chlorophenylamidinourea;
3-chloro-4-fluorophenylamidinourea;
3-bromo-4-fluorophenylamidinourea;
3-fluoro-4-chlorophenylamidinourea;
2,6-dimethylphenylamidinourea;
2,6-diethylphenylamidinourea;
2-methyl-6-ethylphenylamidinourea;
2-methyl-6-methoxyphenylamidinourea;
2-methyl-6-ethoxyphenylamidinourea;
2-ethyl-6-ethoxyphenylamidinourea;
3,4-dimethoxyphenylamidinourea;
3,4-dihydroxyphenylamidinourea;

3,4,5-trimethoxyphenylamidinourea;
3,4,5-trihydroxyphenylamidinourea;
1-(2,6-dimethylphenylamidino)-3,3-(N-methyl-3'-azapentamethylene)urea;
1-(2,6-dimethylphenylamidino)-3,3-(N-methyl-3'-azahexamethylene)urea;
1-(2,6-dimethylphenylamidino)-3,3-(3'-oxapentamethylene)urea;
1-(2,6-dimethylphenylamidino)-3,3-(2'-thiatetramethylene)urea;
1-(2,6-dimethylphenylamidino)-3,3-tetramethyleneurea;
1-(p-fluorophenylamidino)-3,3-(α, α-dimethylpentamethylene)urea;
1-(2,6-dimethylphenylamidino)-3,3'-(α α-dimethylpentamethylene)urea;
1-(2,6-dimethylphenylamidino)-3,3-(pentamethylene)urea;
1-(2,6-dimethylphenylamidino)-3,3-(α-methylpentamethylene)urea;
1-(N-methylamidino)-3-(2,6-dimethylphenyl)urea;
1-(N-methylamidino)-3-(2,6-diethylphenyl)urea;
1- amidino-3-(2-methyl-6-chlorophenyl)urea;
1-amidino-3-(2-methyl-6-bromophenyl)urea;
1-amidino-3-(2-methyl-6-methoxyphenyl)urea;
1-amidino-3-(2,6-dimethylphenyl)urea;
1-amidino-3-(2-methyl-6-ethylphenyl)urea;
1-amidino-3-(2,6-diethylphenyl)urea;
1-amidino-3-methyl-3-(2-methyl-6-chlorophenyl)urea;
1-amidino-3-methyl-3-(2-methyl-6-bromophenyl)urea;

1-amidino-3-methyl-3-(2-methyl-6-methoxyphenyl) urea;

1-amidino-3-methyl-(2,6-dimethylphenyl)urea;

1-amidino-3-methyl-3-(2-methyl-6-ethylphenyl) urea;

1-amidino-3-methyl-3-(2-ethyl-6-chlorophenyl) urea;

1-amidino-3-methyl-3-(2-ethyl-6-bromophenyl) urea;

1-amidino-3-methyl-3-(2-ethyl-6-methoxyphenyl) urea;

1-amidino-3-methyl-3-(2,6-diethylphenyl)urea;

1-amidino-3-(2-methyl-6-chlorophenyl)urea;

1-amidino-3-(2-methyl-6-bromophenyl)urea;

1-amidino-3-(2,6-dimethyl-4-hydroxyphenyl) urea;

1-amidino-3-(2,6-dimethyl-3-hydroxyphenyl) urea;

1-amidino-3-(2,6-dimethyl-3,4-dihydroxyphenyl) urea;

1-amidino-3-(2,6-dimethyl-3,4,5-trihydroxyphenyl)urea.

1-amidino-3-(2,6-dimethyl-4-methoxyphenyl) urea;

1-amidino-3-(2,6-dimethyl-3-methoxyphenyl) urea;

1-amidino-3-(2,6-dimethyl-3,4-dimethoxyphenyl) urea;

1-amidino-3-(2,6-dimethyl-4-ethoxyphenyl) urea;

1-amidino-3-(2-ethyl-6-chlorophenyl)urea;

1-amidino-3-(2,6-dimethyl-3,4 diethoxyphenyl) urea;

1-(2,6-dimethyl-4-hydroxyphenyl)-3-methyl-amidinourea;
1-(2,6-dimethyl-3-hydroxyphenyl)-3-methyl-amidinourea;
1-(2,6-dimethyl-3,4-dihydroxyphenyl)-3-methyl-amidinourea;
1-(2,6-dimethyl-4-methoxyphenyl)-3-methyl-amidinourea;
1-(2,6-dimethyl-3-methoxyphenyl)-3-methyl-amidinourea;
1-(2,6-dimethyl-3,4-dimethoxyphenyl)-3-methyl-amidinourea;
1-(2,6-dimethyl-4-ethoxyphenyl)-3-methyl-amidinourea;
1-(2,6-dimethyl-3-ethoxyphenyl-3-methyl-amidinourea;
1-(2,6-dimethyl-3,4-diethoxyphenyl)-3-methyl-amidinourea;
1-amidino-3-(2,6-dimethylphenyl)urea;
1-amidino-3-(2-methyl-6-ethylphenyl)urea;
1-amidino-3-(2-ethyl-6-chlorophenyl)urea;
1-amidino-3-(2-ethyl-6-bromophenyl)urea;
1-amidino-3-(2-ethyl-6-methoxyphenyl)urea;
1-amidino-3-(2,6-diethylphenyl)urea;
1-amidino-3-methyl-3-(2-methyl-6-chlorophenyl) urea;
1-amidino-3-methyl-3-(2-methyl-6-bromophenyl) urea;
1-amidino-3-methyl-3-(2-methyl-6-methoxyphenyl) urea;
1-amidino-3-methyl-3-(2,6-dimethylphenyl)urea;
1-amidino-3-methyl-3-(2-methyl-6-ethylphenyl) urea;

1-amidino-3-methyl-3-(2-ethyl-6-chlorophenyl) urea;
1-amidino-3-methyl-3-(2-ethyl-6-bromophenyl) urea;
1-amidino-3-methyl-3-(2-ethyl-6-methoxyphenyl)urea;
1-amidino-3-methyl-3-(2,6-diethylphenyl)urea;
1-(2,6-dichlorophenylamidino)-3-n-propylurea;
1-(2,6-dimethylphenyl)-3-(isopropylamidino) urea;
1-(4-bromo-3-chloro-6-methylphenyl)-3-methyl-amidinourea;
1-(2-bromo-6-methylphenyl)-3-methylamidino-urea;
1-(2,6-dimethylphenyl)-3-(N-methyl-N'-propyl-amidino)urea and the non-toxic acid addition salts of each of the above compounds.

The antimotility activity of the amidinoureas of formulae I to VI, and their ability to enhance food nutrient digestion and absorption have been demonstrated for certain amidinoureas representative of their class.

Among the tests which demonstrate the usefulness of these amidinoureas are the following:

Gastric Emptying

The gastric emptying test is performed essentially as described by Brodie in Gastroenterology 50, 45-50 (1966). Male Sprague-Dawley rats (groups of five) are dosed orally with the test compounds or controls 30 minutes before the oral administration of 30 Amerlite pellets (Rohm & Haas Amberlite 1RA-93, 1 mm diameter) suspended in

1 cm3 distilled water. The animals are killed with pentobarbital four hours after the pellets are given; the stomachs are removed and the number of pellets remaining in the stomach counted. The control group is compared to the drug treated group using the following formula: %retention = [(mean drug-treated) - (mean control) / 30-(mean control)] X 100.

Table I

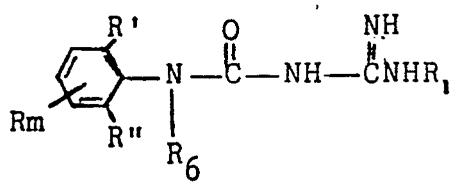

| R' | R" | Rm | $R_6$ | $R_1$ | Dose mg/kg | % Inhib |
|---|---|---|---|---|---|---|
| $CH_3$ | H | H | H | H | 10 | 54 |
| H | H | $4NO_2$ | H | H | 10 | 59 |
| Cl | H | 4-Cl | H | H | 10 | 85 |
| H | H | 3-Cl 4-Cl | H | H | 10 | 74 |
| $CH_3$ | H | 4-Cl | H | H | 10 | 28 |
| Cl | H | $4-CH_3$ | H | H | 10 | 40 |
| Cl | Cl | 4Br | H | H | 40 | 54 |
| $CH_3$ | $CH_3$ | $4-CH_3$ | H | H | 10 | 45 |
| Cl | F | H | H | H | 0.25 | 60 |
| Cl | Cl | H | H | H | 0.125 | 54 |
| Cl | $CH_3$ | H | H | H | 0.25 | 43 |
| $OCH_3$ | $CH_3$ | H | H | H | 0.5 | 70 |
| $CH_3$ | $CH_3$ | H | H | H | 0.25 | 55 |
| ET | $CH_3$ | H | H | H | 0.5 | 30 |
| ET | ET | H | H | H | 2.5 | 83 |
| $CH_3$ | $CH_3$ | H | $CH_3$ | H | 2 | 55 |

Charcoal Motility

A charcoal suspension (10 $cm^3$/kg of a 10% suspension of activated charcoal, U.S.P. in 0.5% methylcellulose) is given orally either to groups of 10 Swiss-Webster male mice (18-22 g, Taconic Farms) or groups of 5 Sprague-Dawley male rats (120-140 g, Charles River Breeding Labs., Inc.) 30 minutes after an oral dose of drug or control. The animals are sacrificied 30 minutes after receiving the charcoal and the intestines are carefully removed without stretching and placed lengthwise on moist paper. The length of the intestine (pyloric sphincter to caecum) and the distance travelled by the charcoal as a fraction of that length are evaluated for each animal and group means are compared and expressed as percentage inhibition;

$$\% \text{ inhibition} = \frac{(\text{mean distance in controls}) - (\text{mean distance in treated})}{\text{mean distance in controls}} \times 100$$

For estimation of the duration of inhibition, the interval between dosing with drug and the administration of charcoal is varied from 30 minutes to 6 hours.

Table II

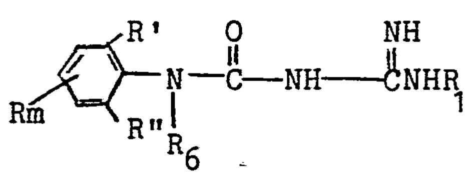

| R' | R" | Rm | $R_6$ | $R_1$ | Dose mg/kg | %Inhib. |
|---|---|---|---|---|---|---|
| $CH_3$ | H | H | H | $CH_3$ | 4 | 11 |
| H | H | 4-$NH_2$ | H | ET | 4 | 20 |
| $CH_3$ | $CH_3$ | 3Br | H | $CH_3$ | 4 | 22 |
| $CH_3$ | $CH_3$ | 4-$CH_3$ | H | n-Pr | 4 | 15 |
| Br | Br | H | H | H | 4 | 91 |
| Br | $CH_3$ | H | H | H | 4 | 89 |
| $CH_3$ | $NO_2$ | H | H | H | 4 | 82 |
| Cl | $CH_3$ | H | $CH_3$ | H | 4 | 82 |
| $CH_3$ | $CH_3$ | H | n-Bu | H | 4 | 72 |
| ET | ET | H | $CH_3$ | H | 4 | 12 |

********

Studies on poultry conducted under strict laboratory conditions, that is, in a disease and parasite-free environment, indicate that the administration of feed efficiency agents, such as the amidinoureas defined in formulae I-VI and in particular 1-(2,6-dimethylphenyl)-3-methylamidinourea, results in an increase in the feed conversion ratio and weight gain of the treated animal relative to that of the control animals. The % improvement in the feed conversion ratio in the treated animals as compared with the controls is expressed by:

$$\frac{\text{Body Weight Gain of Treated Group}}{\text{Feed Consumption of Treated Group}} \div \frac{\text{Body Weight Gain of Control Group}}{\text{Feed Consumption of Control Group}}$$

X 100

The % improvement was observed as being up to about 10%, and averaged over a five week period at up to about 5%.

In addition to the amidinoureas illustrated above as suitable feed efficiency agents for use in accordance with the method of this invention, other agents possessing antimotility activity and lacking growth retardant properties such as diphenoxylates and loperamide can also be used. Moreover these agents, including the amidinoureas, can be used in combination as well as singly. It will be appreciated that agents which have antimotility activity but which possess additional properties which act to retard digestion and absorption of feed nutrients should not be employed in the method of this invention.

The effective dosage of a feed efficiency agent in the method of this invention will be relatively much smaller than dosages commonly employed to obtain a therapeutic effect. For example, in a preferred embodiment of the method of the invention, the feed efficiency agents (preferably the amidinoureas of Formulae I to VI) are utilized in a dosage of from about 0.005 mg/kg to about (but preferably below) 0.5 mg/kg, or more preferably from about 0.01 mg/kg to about (but preferably below) 0.1 mg/kg daily.

A particularly preferred feed efficiency agent is 3-(2,6-dimethylphenyl)-1-methyl--amidino-urea, administered at the dosages just indicated. The amidinoureas are conveniently

used in the form of pharmaceutically acceptable acid addition salts, preferably the hydrochloride salt.

The feed efficiency agents employed in accordance with this invention are preferably administered as part of the animal's feed, and thus in association with nutrients or feed supplements.

Accordingly, this invention provides a composition for use in increasing the feed efficiency of animals, which composition comprises one or more feed efficiency agents, being compounds which increase the dwell time of nutrient matter in the digestive tract of the animal and which thereby afford an increase in digestive absorption, together with one or more feed supplement agents, being compounds which supplement the animal's daily dietary intake, or with at least a portion of the daily dietary intake.

Thus the composition of the invention may take the form of a liquid or solid feed supplement, for instance a feed block, containing a feed efficiency agent and a feed supplement agent. The latter may be chosen from among the feed supplements commonly used in animal husbandry - for example protein supplements(which are used in feeding cattle and sheep), bonemeal, salt, trace minerals, vitamins, an electrolyte, antibiotics, growth promoters (e.g. growth hormones) antibacterial agents, antiparasitics and tranquilizers etc.

The feed efficiency agent may be incorporated directly in the animal's daily dietary intake, for instance in silage, oats, barley, bran and the like. Where the feed efficiency agent is distributed uniformly throughout substantially the whole of the animal's daily dietary intake, as is preferred, the concentration of the feed efficiency agent in the intake will be from about 0.5 or about 1.0 ppm to about 20 ppm, preferably to about 10 ppm. Such an intake is a composition of the invention, and consumption thereof by an animal will normally be sufficient to increase substantially the animal's food retention and produce higher feed efficiency.

By way of example, calves in their early to mid growth stage will show better food utilization when about 0.5 or 1.0 to 10 milligrams, preferably about 1 to about 5 milligrams and more preferably about 1 to about 2.5 milligrams of feed efficiency agent, particularly an amidinourea of formulae I to VI, is uniformly distributed throughout one kilogram of the animal's daily dietary intake.

Uniform distribution of the feed efficiency agent throughout the animal's dietary intake may be achieved by providing the agent in the form of a powder or pellets or the like which may easily be distributed in the intake. Alternatively a feed-premix for distribution throughout the daily dietary intake may be prepared, which pre-mix contains a feed efficiency agent together with either a feed supplement as above and/or a portion

of the intake. Preferably the pre-mix will comprise a portion of the intake and from 0.2% to 0.4% (based on the weight of the premix) of the feed efficiency agent - this premix to be mixed with substantially the remainder of the animal's daily dietary intake in a ratio of about 1lb of premix to about one ton of intake (about 7 kg of premix to about 1 tonne of intake). Such a pre-mix is a composition of this invention.

The concentration of the feed efficiency agent in the animal's daily dietary intake and in the feed pre-mix, and the concentration of the premix in the intake, given above assume an average consumption of feed by the animals in question. If however the animals' consumption departs from the average, the above concentrations should be altered in order to ensure that each animal receives an effective daily dosage of feed efficiency agent.

The feed efficiency agents may also if desired be fed directly to the animals with or without suitable diluents and other edible excipients.

The method of this invention is useful for improving the feed efficiency of all animals grown for commercial food production purposes, including those animals which are grown for meat production such as cattle, sheep, hogs, rabbits, chickens, ducks, geese, turkeys, pheasants and the like, as well as

those animals which are grown for production of other food or useful animal products such as dairy products, eggs, wool, fur and the like. Use of the method of this invention will shorten the growth period when fed to animals during their growing stages thereby reducing the time from birth to slaughter for animals grown for products such as meat, furs and the like. Thus the method of the invention is preferably applied during the animal's normal growth stages.

When used with mature animals however, the compositions and method of this invention are very effective to reduce the animal's feed requirement whilst maintaining the animal at full productivity, especially with work animals such as horses. In all cases, the use of the method of this invention provides a greater output of animal products relative to the amount of animal feed consumed than could be achieved by maintaining the animal at the same feed regimen without feed efficiency agents.

It should be understood that the examples given herein are by way of illustration only and are not to be construed as limiting the invention, which contemplates the administration of any compound possessing antimotility properties, or which enhances feed retention time in an animal and so increases nutrient digestive and absorptive activity, to food-producing animals which provide meat, milk, etc., particularly livestock and poultry, to obtain higher food production per unit of animal feed consumed.

CLAIMS

1. A method for increasing the feed efficiency of an animal, which method comprises administering to the animal one or more feed efficiency agents, being compounds which increase the dwell time of nutrient matter in the digestive tract of the animal and which thereby afford an increase in digestive absorption, the one or more agents being administered to the animal for a period of time sufficient to allow an increase in the digestion and absorption level which would have been achieved had the agent or agents not been administered to the animal.

2. A method as claimed in claim 1, in which the feed-efficiency agent is an antimotility agent.

3. A method as claimed in claim 2, in which the feed efficiency agent is an amidinourea, being a compound of the formula:

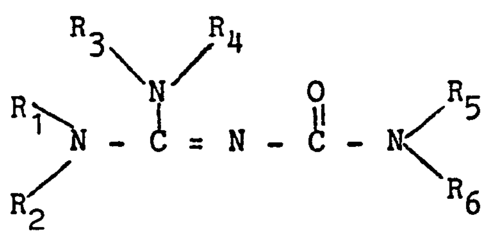

(I)

[wherein either $R_1$ is phenyl, substituted phenyl (as defined herein), aralkyl, heterocycle (as defined herein), or substituted heterocycle (as defined herein), and $R_2$, $R_5$ and $R_6$, which may be the same or different, are hydrogen, lower-alkyl, hydroxy, lower-alkoxy, lower-alkenyl, cyclo-lower-alkenyl, cyclo-lower-alkyl, aralkyl,

lower-alkynyl, halo-alkyl, hydroxy-lower-alkyl, lower-alkoxy-lower-alkyl, cyano-lower-alkyl, amino-lower-alkyl, mono- or di-(lower-alkyl)--amino-lower-alkyl, carbamoyl-lower-alkyl, mono- or di-(alkyl)-carbamoyl-lower-alkyl, lower--alkoxy-carbamoyl-lower-alkyl, aralkoxy-carbamoyl--lower-alkyl, acyl-lower-alkyl, alkyl-sulphonyl or aralkyl-sulphonyl with the additional possibility that $R_5$, $R_6$ and the intervening nitrogen atom may together form a 5 or 6 membered heterocyclic ring which optionally may include 1 or 2 additional hetero atoms chosen independently from oxygen, nitrogen and sulphur; <u>or</u> $R_5$ is phenyl, substitued phenyl (as defined herein), aralkyl, heterocycle (as defined herein) or substituted heterocycle (as defined herein), and $R_1$, $R_2$ and $R_6$, which may be the same or different, are hydrogen, lower-alkyl, hydroxy, lower-alkoxy, lower-alkenyl, cyclo-lower-alkenyl, cyclo-lower-alkyl, aralkyl, lower-alkynyl, halo--alkyl, hydroxy-lower-alkyl, lower-alkoxy-lower--alkyl, cyano-lower-alkyl, amino-lower-alkyl, mono- or di-(lower-alkyl)-amino-lower-alkyl, carbamoyl-lower-alkyl, mono- or di-(alkyl)--carbamoyl-lower-alkyl, lower-alkoxy-carbamoyl--lower-alkyl, aralkoxy-carbamoyl-lower-alkyl, acyl--lower-alkyl, alkyl-sulphonyl or aralkyl-sulphonyl, with the additional possibility that either $R_1$, $R_2$ and the intervening nitrogen atom may together form a 5 or 6 membered heterocyclic ring, or $R_1$, $R_3$ and the intervening two nitrogen atoms and carbon atom may together form a 5 to 8 membered heterocyclic ring, which ring may in either case optionally include 1 or 2 additional hetero atoms chosen independently from oxygen, nitrogen and sulphur;

and $R_3$ (when not forming part of a heterocyclic ring with $R_1$) and $R_4$, which may be the same or different, are hydrogen, lower-alkyl, lower-alkoxy, lower-alkenyl, lower-alkynyl, cyclo--lower-alkyl or aralkyl] or a non-toxic acid addition salt thereof.

4. A method as claimed in claim 3, in which the amidinourea is either a compound of the formula:

(II)

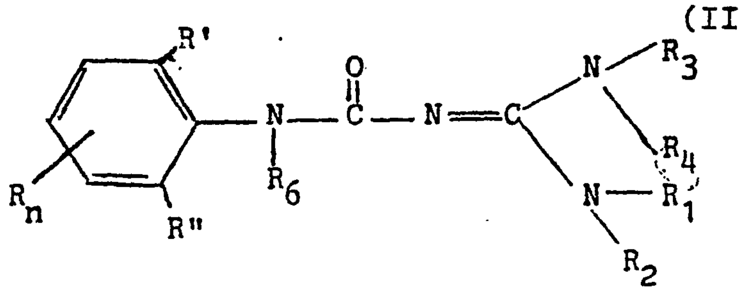

[wherein $R_1$, $R_2$, $R_3$ and $R_4$, which may be the same or different are hydrogen, lower-alkyl, hydroxy, halo-lower-alkyl or lower-alkoxy; $R_6$ is hydrogen or lower-alkyl; R' and R", which may be the same or different, are hydrogen, lower-alkyl, lower-alkoxy, halo or halo-lower-alkyl; and $R_n$ represents zero, one, two or three substituents in any one or more of the para and meta positions, which substituents may be independently chosen from hydrogen, lower-alkyl, halo, lower-alkoxy, nitro, amino and halo-lower-alkyl] or a non-toxic acid addition salt thereof; or a compound of the formula:

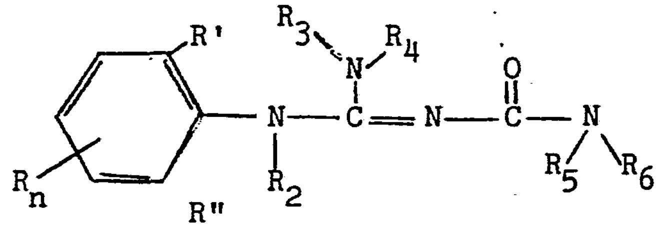

(III)

[wherein $R_3$, $R_4$, and $R_5$ and $R_6$, which may be the same or different, are hydrogen, lower-alkyl, hydroxy, halo-lower-alkyl or lower-alkoxy; $R_2$ is hydrogen or lower-alkyl; R' and R", which may be the same or different, are hydrogen, lower-alkyl, lower-alkoxy, halo or halo-lower-alkyl; and $R_n$ represents zero, one, two or three substituents in any one or more of the para and meta positions, which substituents may be independently chosen from hydrogen, lower-alkyl, halo, lower-alkoxy and halo-lower-alkyl;] or a non-toxic acid addition salt thereof.

5. A method as claimed in claim 4, in which the amidinourea is <u>either</u> a compound of the formula:

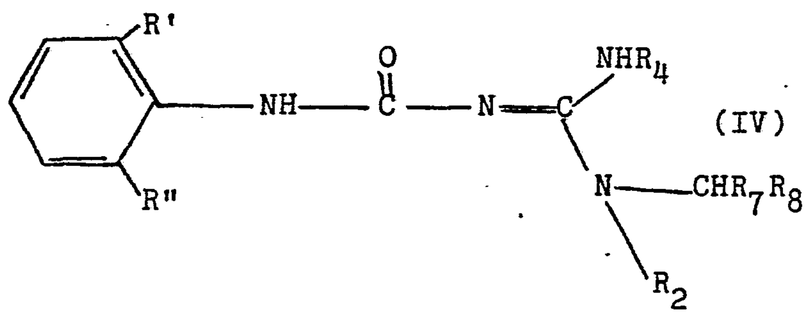

(IV)

[wherein $R_2$, $R_4$, $R_7$ and $R_8$, which may be the same or different, are hydrogen, lower-alkyl, lower-alkoxy or hydroxy; and R' and R", which may be the same of different, are hydrogen,

halo or lower-alkyl] or a non-toxic acid addition salts; or a compound of the formula:-

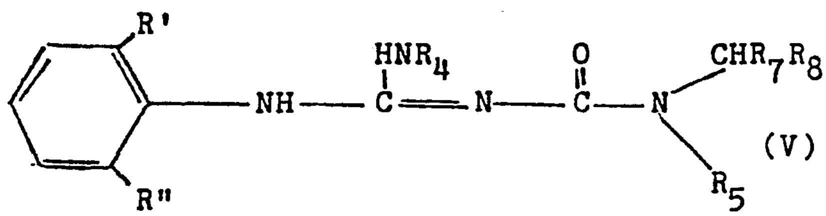

(V)

[wherein $R_4$, $R_5$, $R_7$ and $R_8$, which may be the same or different, are hydrogen, lower-alkyl, lower-alkoxy or hydroxy; and R' and R", which may be the same or different, are hydrogen, halo or lower alkyl] or a non-toxic acid addition salt thereof.

6. A method as claimed in claim 3, in which the amidinourea is a compound of the formula:

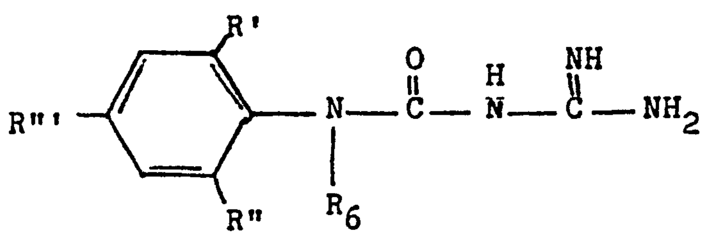

(VI)

[wherein R' and R", which may be the same or different, are halo, lower-alkyl, lower-alkoxy or nitro; R"' is hydrogen, lower-alkyl, halo or nitro; and $R_6$ is hydrogen or lower-alkyl] or a non-toxic acid addition salt thereof.

7. A method as claimed in claim 3, in which the amidinourea is:

1-amidino-3-(2-chloro-6-fluoro-phenyl)urea;
1-amidino-3-(2,4,6-trimethylphenyl)urea;
1-amidino-3-(2,6-dichlorophenyl)urea;
1-amidino-3-(2-chloro-6-methylphenyl)urea;
1-amidino-3-(2-methoxy-6-methylphenyl)urea;
1-amidino-3-(2,6-dimethylphenyl)urea;
1-amidino-3-(2-ethyl-6-methylphenyl)urea;
1-amidino-3-(2,6-diethylphenyl)urea;
1-amidino-3-methyl-3-(2,6-dimethylphenyl)urea;
1-amidino-3-(2,6-dibromophenyl)urea;
1-amidino-3-(2-bromo,6-methylphenyl)urea;
1-amidino-3-(2-methyl,6-nitrophenyl)urea;
1-amidino-3-methyl-3-(2-chloro-6-methylphenyl)urea;
1-amidino-3-n-butyl-3-(2,6-dimethylphenyl)urea;
1-amidino-3-methyl-3-(2,6-diethylphenyl)urea;
1-amidino-3-(4-bromo,2,6-dichlorophenyl)urea;
1-amidino-3-(2-methyl-phenyl)urea;
1-amidino-3-(4-nitrophenyl)urea;
1-amidino-3-(2,4-dichlorophenyl)urea;
1-amidino-3-(3,4-dichlorophenyl)urea;
1-amidino-3-(4-chloro-2-methylphenyl)urea;
or 1-amidino-3-(2-chloro,4-methylphenyl)urea;
or a non-toxic acid addition salt, preferably the hydrochloride, of any one of the above-listed compounds;
or, very preferably, 3-(2,6-dimethylphenyl)-1-methylamidino-urea, or its hydrochloride acid addition salt.

8. A method according to any one of the preceding claims, wherein the feed-efficiency agent is administered to the animal at a rate of from about 0.005 mg/kg to about 0.5 mg/kg, and preferably from about 0.01 mg/kg to about 0.1 mg/kg, of animal body weight per day.

9. A composition for use in increasing the feed efficiency of animals, which composition comprises one or more feed efficiency agents, being compounds which increase the dwell time of nutrient matter in the digestive tract of the animal and which thereby afford an increase in digestive absorption, together with one or more feed supplement agents, being compounds which supplement the animal's daily dietary intake, or with at least a portion of the daily dietary intake.

10. A composition as claimed in claim 9, in which the feed-efficiency agent is an antimotility agent and is preferably an amidinourea as defined in any of claims 3 to 7.

11. A composition as claimed in claim 9 or claim 10 in the form of daily dietary intake for an animal, for example silage, oats, barley, bran and the like, incorporating from about 0.5 ppm to about 20 ppm, preferably 1 to 10 ppm, of a feed efficiency agent.

12. A composition as claimed in claim 9 or claim 10 in the form of a feed pre-mix for incorporation into the daily dietary intake of an animal, which pre-mix comprises from about 0.2% to about 0.4% by weight of a feed efficiency agent, together with one or more feed supplement agents or preferably a portion of the daily dietary intake.

13. A composition as claimed in claim 9 or claim 10 in the form of a feed supplement, which supplement comprises a feed efficiency agent together with one or more feed supplement agents, for example, a protein supplement, a growth promoter (e.g. a growth hormone), an electrolyte, a tranquilizer, bonemeal, salt, or one or more trace minerals, vitamins, antibiotics, antibacterial agents or antiparasitics etc.

European Patent Office

# EUROPEAN SEARCH REPORT

0073276

Application number

EP 81 30 3844.5

## DOCUMENTS CONSIDERED TO BE RELEVANT

| Category | Citation of document with indication, where appropriate, of relevant passages | Relevant to claim |
|---|---|---|
| X | DE - A1 - 2 645 613 (AMERICAN CYANAMID)<br>* claims 1, 17, 18; page 49, paragraph 3 *<br>& US - A - 4 060 627 | 1,8<br>11-13 |
| X | DE - A1 - 2 945 701 (W.H. RORER INC.)<br>* page 15, paragraph 2 *<br>& US - A - 4 246 409 | 1,2 |
| X | AU - A - 463 706 (SMITH KLINE & FRENCH LABORATORIES)<br>* claims 1, 2; page 2, paragraph 1; page 10, paragraph 4 to page 11, paragraph 1 * | 1,8,9,<br>11-13 |
| D,A | US - A - 3 914 245 (M. GALL) | |
| D,A | US - A - 3 933 794 (J.B. HESTER, JR. et al.) | |
| D,A | US - A - 4 088 785 (J. DIAMOND et al.) | |
| D,A | US - A - 4 147 804 (J. DIAMOND et al.) | |
| A | US - A - 4 216 230 (J. DIAMOND et al.)<br>* abstract * | |
| A | US - A - 4 183 956 (J. DIAMOND et al.)<br>* abstract * | |

./..

**CLASSIFICATION OF THE APPLICATION (Int. Cl. 3)**

A 23 K 1/16
A 23 K 1/22
A 23 K 1/18
C 07 C 129/12

**TECHNICAL FIELDS SEARCHED (Int.Cl. 3)**

A 23 K 1/00
C 07 C 129/00
C 07 D 243/00
C 07 D 249/00
C 07 D 251/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 25-02-1982 | SCHULTZE |

European Patent Office

# EUROPEAN SEARCH REPORT

0073276

Application number
EP 81 30 3844.5



| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | US - A - 4 219 567 (J. DIAMOND et al.)<br>* claim 1; abstract *<br>-- | | |
| A | Chemical Abstracts vol. 81, no. 11, 16 September 1974<br>Columbus, Ohio, USA<br>R. TAMMISO et al. "Sedative action of 3,4,5-trimethoxybenzoyl-N,N'-diethylguanidine in animals"<br>page 20, abstract no. 58245x<br>& Riv. Farmacol. Ter., vol. 4, no. 3, 1973, pages 295 to 307<br>-- | | TECHNICAL FIELDS SEARCHED (Int. Cl.3) |
| A | GB - A - 1 480 643 (W.H. RORER INC.)<br>* claims 1, 9; page 6, lines 25 to 30 *<br>---- | | |